# FASCICULE DE BREVET EUROPEEN

(11) **EP 3 172 793 B1**
(45) Date de publication et mention de la délivrance du brevet: **20.06.2018**
(21) Numéro de dépôt: 15760257.4
(22) Date de dépôt: 21.07.2015
(51) Int. Cl.: H01M 10/54, H01M 10/0525, H01M 10/0568, H01M 10/0569

(54) **PROCEDE DE RECYCLAGE DE L'ELECTROLYTE D'UNE BATTERIE DE TYPE LI-ION ET PROCEDE DE RECYCLAGE DES BATTERIES DE TYPE LO-ION**
VERFAHREN ZUR WIEDERVERWENDUNG DES ELEKTROLYTS EINER LI-IONEN-BATTERIE UND VERFAHREN ZUR WIEDERVERWERTUNG VON LI-IONEN-BATTERIEN
METHOD FOR RECYCLING THE ELECTROLYTE OF A LI-ION BATTERY AND METHOD FOR RECYCLING LI-ION BATTERIES

(30) Priorité: 22.07.2014 FR 1457080
(43) Date de publication de la demande: 31.05.2017
(73) Titulaire: Commissariat à l'Énergie Atomique et aux Énergies Alternatives, 75015 Paris (FR)
(72) Inventeur: BILLY, Emmanuel, F-38100 Grenoble (FR); LAUCOURNET, Richard, F-38500 La Buisse (FR)
(74) Mandataire: Gevers & Orès
(86) Numéro de dépôt international: PCT/IB2015/055516
(87) Numéro de publication internationale: WO 2016/012941

(56) Documents cités:
- WO-A1-2013/118300
- JP-A- 2000 030 741
- KR-A- 20140 082 077
- US-A- 5 352 270

## Description

L'invention concerne un procédé de recyclage de l'électrolyte d'une batterie de type lithium-ion. Elle concerne également un procédé de recyclage des batteries de type lithium-ion.

Les batteries de type lithium-ion (Li-ion) ont plusieurs applications, notamment, dans le domaine des véhicules électriques et hybrides, dans les appareils nomades, tels que les téléphones mobiles, les ordinateurs portables, les appareils photo, les caméscopes les systèmes de localisation GPS, etc.

Ces nombreuses applications requièrent l'utilisation d'une grande quantité de batteries. Il se pose donc la question du recyclage des batteries usagées.

Depuis les dernières décennies les industriels prennent de plus en plus en considération les aspects écologiques de la fabrication et de la destruction des produits. En particulier, l'intérêt se porte sur la récupération et le recyclage de ces produits pour, à la fois, respecter l'équilibre écologique et réduire les coûts.

Ces principes de récupération et de recyclage sont déjà très largement appliqués au domaine des batteries étant donné leur large utilisation.

En particulier, le développement rapide de véhicules électriques implique de garantir des procédés de récupération et de recyclage de batteries qui répondent au cadre réglementaire et aux enjeux économiques et environnementaux. Généralement, les traitements s'intéressent de façon quasi-exclusive aux matériaux à plus fortes valeurs ajoutées, par exemple, les matériaux d'insertion d'électrode positive à base de cobalt et/ou nickel.

En raison des contraintes réglementaires de plus en plus drastiques, la récupération de l'électrolyte représente une véritable source de valorisation sur le plan économique et environnemental.

Actuellement, il existe plusieurs types de procédés de recyclage de batteries de type Li-ion, les principaux étant : le recyclage par traitement thermique, le recyclage en milieu liquide ionique, le recyclage hydro métallurgique et le recyclage par traitement organique.

Les Brevets TW501294, JP10046266, JP10158751 et JP10074539 divulguent des procédés de recyclage de batteries par traitement thermique.

Le brevet TW501294 décrit un procédé de récupération des déchets de batteries de type Li-ion qui s'effectue dans un four qui entraîne la décomposition de l'électrolyte organique. Ce procédé comprend plusieurs étapes de séparation physique et chimique qui conduisent à la récupération du lithium sous forme de carbonate.

Les brevets JP10046266, JP10158751 et JP10074539A divulguent des procédés dans lesquels les composés organiques sont brûlés pour récupérer uniquement le nickel, le cobalt et le lithium.

Tous ces procédés thermiques ne permettent pas la récupération des composés organiques. Par ailleurs ils sont énergivores et particulièrement générateurs de gaz et des particules fines toxiques pour l'homme et l'environnement

La demande de brevet EP2410603 A1 divulgue un procédé de recyclage de batteries de type Li-ion en milieu liquide ionique. Ce procédé est un procédé de récupération de l'électrolyte organique et du sel hexafluorophosphate de lithium (LiPF6) dans les batteries lithium-ion, Dans le procédé, l'électrolyte de la batterie est mis en contact avec un chlorure de phosphonium qui entraîne la formation d'une phase solide par précipitation du lithium sous forme de chlorure de lithium et la formation d'une phase liquide comprenant les carbonates et le liquide ionique (hexafluorophosphate de phosphonium). Après une séparation solide/ liquide, de l'eau est ajoutée dans la solution de carbonate et de liquide ionique entrainant la formation de deux phases immiscibles. Une première phase contient majoritairement de l'eau et les carbonates. La seconde phase est composée de l'hexafluorophosphate de phosphonium. Ensuite, chaque phase est indépendamment purifiée par distillation sous vide pour extraire l'eau des carbonates et du liquide ionique.

Ce procédé ne décrit pas la phase d'extraction de l'électrolyte de la batterie, indispensable pour récupérer les solvants organiques et le sel de lithium LiPF₆. Dans le cas où l'extraction de l'électrolyte serait réalisée avec le chlorure de phosphonium, celui-ci ne permet pas de séparer le sel de lithium des éléments de batterie. En effet, ceci entraînerait la précipitation de chlorure de lithium. De plus, la présence du liquide ionique engendrera la génération d'impuretés à la fois dans la phase liquide et dans les composants de batterie de la phase solide, qui devront alors être purifiées.

Les demandes de brevet US 2012/03121126 A1 et WO2005101564 A1 divulguent des procédés de recyclage hydro-métallurgiques.

Le document US 2012/0312126 A1 décrit un procédé de récupération des métaux des batteries lithium ion. Après désassemblage et triage des éléments de batterie, les éléments subissent une attaque acide qui extrait le lithium et les métaux de transition. La solution acide est ensuite traitée par dialyse avec une membrane perméable aux anions afin de séparer le cobalt du lithium. Enfin, le lithium est précipité en carbonate de lithium et le cobalt en hydroxyde de cobalt.

Ce procédé ne permet pas de traiter l'électrolyte de la batterie et s'intéresse exclusivement aux éléments à plus forte valeur ajoutée (Co, Ni, Cu, Al).

Le document WO2005101564 A1, quant à lui, décrit un procédé de récupération de batteries à base de lithium qui sont broyées à sec sous atmosphère inerte. Suite à cela, les broyats sont triés et traités par un procédé hydrométallurgique. Le cobalt et les copeaux contenant du lithium sont lavés avec de l'eau, relargant ainsi le lithium précipité. Les copeaux sont traités par une attaque acide afin de récupérer le cobalt. Les anions hexafluorophosphates sont récupérés sous la forme de complexe avec [Ni(NH3)₆]²⁺ ou avec le dihydro-1,4-diphényl-3,5-phénylimino-1,2,4-triazole.

Ce procédé ne permet pas de récupérer de façon simultanée le lithium, l'hexafluorophosphate et les carbonates organiques provenant de l'électrolyte.

Les documents US006329096 et CA23131173 A1 divulguent des procédés de recyclage des batteries de type Li-ion par traitement organique et aqueux.

Le brevet US6329096 décrit un procédé et d'un appareil pour la récupération de batteries primaires et secondaires comprenant au moins une cathode, une anode et un électrolyte scellés dans une pile accumulatrice. La première étape du procédé consiste à enlever la pile accumulatrice de la batterie tout en assurant sa mise en sécurité. Pour cela, la conductivité ionique entre la cathode et l'anode est abaissée par le refroidissement de la pile à des températures inférieures au point de solidification de l'électrolyte ou de transition vitreuse, généralement comprises entre 0 et -20°C. La batterie est ensuite découpée puis ouverte afin de retirer ces composants et extraire la solution de la partie solide. L'extraction de l'électrolyte est assurée par une dépression entre l'intérieur et l'extérieur de la pile accumulatrice.

Enfin, les composants sont individuellement triés pour être récupérés. Pour récupérer l'électrolyte de la batterie, un nettoyage avec un solvant organique est préconisé. Cette étape précède une distillation fractionnée pour séparer l'eau, provenant de la découpe à haute pression, de l'électrolyte de la batterie. Le solvant organique préconisé ne doit pas former d'azéotrope avec l'eau. Les exemples de solvant sont le méthanol, l'acétone, le 1,2-propanediol, le diméthyl sulfoxyde, le gamma-butyrolactone, le carbonate d'éthylène et le carbonate de propylène.

Ce procédé ne s'intéresse pas à la récupération du sel de lithium de l'électrolyte mais uniquement à la séparation des solvants organiques et de l'eau par distillation fractionnée. En présence d'un sel de type LiPF₆, la distillation fractionnée entraînera inévitablement la dégradation des anions PF₆⁻ en gaz toxique de type PF₅ et HF. Par ailleurs, leur présence entraînera des réactions de dégradation des solvants présents durant la distillation. Ainsi, le sel de lithium et les solvants organiques seront dégradés.

La demande de brevet CA2313173 A1 décrit un procédé de récupération des batteries lithium ions dans lequel les batteries sont préalablement découpées sous atmosphère inerte. Ensuite, elles sont traitées par un premier solvant organique (acétonitrile) afin d'extraire l'électrolyte (en absence d'eau). Le mélange est ensuite évaporé pour récupérer séparément l'électrolyte de la batterie et l'acétonitrile qui peut être réutilisé.

Le document brevet EP 0613199 A1 décrit un procédé de récupération des matériaux issus des batteries de type Li-ion à électrolyte non-aqueux. La méthode vise à traiter à la fois les matériaux et l'électrolyte organique. La batterie est découpée afin d'éviter l'ignition de celle-ci. La solution électrolytique est extraite soit avec i) un solvant organique soit avec ii) une solution aqueuse. Dans le cas d'une extraction avec un solvant organique, la mise en sécurité est réalisée sous atmosphère inerte. Après l'extraction il y a filtration solide/liquide. Le liquide est traité par une succession de distillation et purification. Dans le cas d'une extraction avec de l'eau, la mise en sécurité est réalisée avec un découpage sous jet d'eau haute pression. Puis, une séparation solide/liquide est mise en oeuvre. Les composants solides de la batterie sont immergés dans un solvant organique (alcool méthylique) qui ne forme pas d'azéotrope avec l'eau. Ensuite, les solutions sont mélangées, entraînant la précipitation du lithium sous la forme d'un hydroxyde de lithium. Après une séparation solide/liquide, la solution est distillée sous pression réduite et une succession de distillations fractionnées est réalisée afin de purifier la solution et séparer les solvants.

Les deux procédés décrits ci-dessus impliquent une étape de récupération de l'électrolyte qui nécessite une distillation fractionnée pour la séparation de l'électrolyte (solvants organiques et sel de lithium) et du solvant d'extraction. Aucun des schémas de traitement ne s'intéresse à la dégradation de l'anion du sel de lithium, en particulier PF6⁻. Or, la présence de cet anion lors de la distillation va inévitablement engendrer la destruction de l'anion. En particulier, la dégradation des anions PF₆⁻ génère des substances toxiques telles que le fluorure d'hydrogène (HF), le pentafluorophosphate (PF₅), le phosphoryle fluoride (POF₃), qui sont extrêmement nocives et dangereuses pour l'homme et l'environnement. Par ailleurs, la présence d'HF et PF₅ entraîne la dégradation des solvants présents durant la distillation. Ainsi, le sel de lithium et les solvants organiques seront fortement dégradés. Par conséquent, ces procédés ne répondent pas au recyclage des électrolytes de batteries contenant, en particulier le sel hexafluorophosphate de lithium LiPF₆, qui est le sel le plus utilisé dans les batteries Li-ion.

Le document brevet KR 2014 0082077 A décrit un procédé de recyclage d'un électrolyte contenant un sel du lithium d'une batterie de type Li-ion. Le procédé décrit par ce document comprend les étapes suivantes: 1) récupération de l'électrolyte ; 2) ajout d'eau à l'électrolyte ; 3) ajout d'acide, par exemple acide hydrochlorique, à la solution obtenue à l'étape 2); 4) neutralisation de la solution de lixiviation acide obtenue à l'étape 3); 5) extraction d'un composé de lithium par addition d'un solvant organique tel que la pyridine; 6) évaporation du solvant organique; 7) carbonatation du composé de lithium extrait, ce par quoi un précipité est obtenu. Ainsi, aucun des procédés connus actuellement ne permet de traiter l'anion du sel de lithium, en particulier hexafluorophosphate. Cet anion est d'une importance cruciale car il se dégrade en des espèces toxiques qui, elles-mêmes, génèrent la dégradation de l'électrolyte de la batterie.

Par conséquent, aucun des procédés de recyclage de l'électrolyte de batteries de type Li-ion, ou des procédés de recyclage de batteries de type Li-ion, connus actuellement, ne permet un recyclage permettant à la fois d'isoler les sels de lithium et d'isoler séparément, chacun des solvants d'électrolyte afin de les réutiliser dans un cycle fermé et de traiter l'anion des sels du lithium, et en particulier, de l'anion hexafluorophosphate.

Le problème technique que la présente invention se propose de résoudre est donc la fourniture d'un procédé de recyclage de l'électrolyte d'une batterie de type Li-ion, ainsi que d'un procédé de recyclage de batteries de type Li-ion, permettant à la fois d'isoler les sels de lithium de l'electrolyte et des électrodes, d'isoler séparément les solvants de l'électrolyte en évitant la dégradation des différents composés mais également de valoriser les anions des sels de lithium sous la forme d'un produit utilisable pour synthétiser de nouveau le sel de lithium.

Le but de la présente invention est donc de fournir un procédé de recyclage de l'électrolyte d'une batterie de type Li-ion et d'un procédé de recyclage des batteries de type Li-ion qui résolvent les problèmes précités rencontrés dans l'art antérieur.

Ainsi, un premier objet de la présente invention est un procédé de recyclage d'un électrolyte contenant un sel du lithium de formule LiA, où A représente un anion choisi parmi PF₆⁻ , CF₃SO₃⁻, BF₄⁻ et ClO₄⁻ d'une batterie de type Li-ion, comprenant les étapes suivantes :
a) récupération de l'électrolyte ;
b) ajout d'eau à l'électrolyte ;
c) ajout d'acide phosphorique ou de sel(s) de carbonate ou de phosphate à la solution obtenue à l'étape b) puis filtration (F1), ce par quoi un sel de lithium et une phase aqueuse sont obtenus ;
d) précipitation de l'anion A du sel de lithium par ajout de pyridine à la phase aqueuse obtenue à l'étape c) puis filtration (F2), ce par quoi on obtient un précipité et une phases aqueuse ;
e) ajout à la solution aqueuse obtenue à l'étape d) d'un acide, choisi parmi H₃PO₄, HCl, H₂SO₄ et l'acide citrique, et/ou d'un sel ou mélange de sels soluble(s) de tels acides, choisi(s) parmi NaCl, KCl, Na₂SO₄, MgSO₄ et K₂SO₄, de manière à obtenir une force ionique de la solution supérieure à 1, de préférence du chlorure de potassium et/ou chlorure de sodium à une concentration de 2 mol.L⁻¹ est (sont) ajouté(s) ;
f) décantation de la phase liquide obtenue après l'étape e), ce par quoi de l'eau et une phase organique contenant les solvants d'électrolyte sont obtenues ;
g) optionnellement, distillation de la phase organique obtenue à l'étape f) pour séparer les solvants de l'électrolyte.

De préférence, dans le procédé de recyclage de l'électrolyte selon l'invention, l'étape a) est réalisée par broyage de la batterie sous jet d'eau ou dans une enceinte sous atmosphère inerte.

Dans ce cas, l'étape b) est suivie d'une étape de filtration (F3) pour séparer la phase liquide de la phase solide obtenue à l'étape a).

Egalement de préférence, l'étape a) et l'étape b) sont mises en oeuvre l'une après l'autre. Mais on pourra également les mettre en oeuvre simultanément, par exemple lorsque le broyage de la batterie est effectué par jet d'eau.

Selon une caractéristique préférée du procédé de l'invention, l'étape f) de décantation est répétée.

Toujours de préférence, l'eau obtenue à l'étape f) est récupérée pour être réutilisée à l'étape b).

Toujours de préférence, le procédé de recyclage d'un électrolyte selon l'invention comprend de plus une étape a1) de lavage à l'eau des solides obtenus après la filtration (F3), suivie d'une étape a2) de filtration (F4) pour séparer la phase liquide de la phase solide et une étape a3) de mélange de la phase liquide obtenue à l'étape a2) avant l'étape c) et de décantation du procédé de recyclage de l'électrolyte.

Un deuxième objet de la présente invention est un procédé de recyclage d'une batterie de type Li-ion, comprenant la mise en oeuvre du procédé de recyclage de l'électrolyte selon l'invention.

Selon une caractéristique préférée du procédé de recyclage de l'électrolyte et du procédé de recyclage de batterie selon l'invention, le solvant de l'électrolyte comprend un mélange binaire ou ternaire de carbonates cycliques choisis parmi le carbonate d'éthylène, le carbonate de propylène et le carbonate de butylène, de carbonates linéaires ou ramifiés choisis parmi le carbonate de diméthyle, le carbonate de diéthyle, le carbonate d'éthylméthyle et le diméthoxyéthane, dans lequel est dissous un sel de lithium choisi parmi l'hexafluorophosphate de lithium, le trifluorométhanesulfonate de lithium, le perchlorate de lithium et le tétrafluoroborate de lithium.

L'invention sera mieux comprise et d'autres avantages et caractéristiques de celle-ci apparaîtront plus clairement à la lecture de la description détaillée qui suit et qui est faite en référence aux figures dans lesquelles :
- la figure 1 est un organigramme représentant schématiquement les différentes étapes du procédé de l'invention,
- la figure 2 est un organigramme représentant les différentes étapes du mode de mise en oeuvre du procédé de recyclage d'un électrolyte de l'invention dans lequel l'étape a) de récupération de l'électrolyte est une étape de traitement de la batterie Li-ion elle-même et dans lequel les étapes a) et b) sont mises en oeuvre simultanément,
- la figure 3 représente le spectre infrarouge de la solution aqueuse et de la solution organique diluée dans une matrice d'acétonitrile, obtenues après l'étape e) de l'exemple 1, et
- la figure 4 représente le spectre infrarouge du mélange de carbonate d'éthylène (EC) et de carbonate de diméthyle (DMC) provenant de l'électrolyte de batterie traité à l'exemple 1 avant l'étape g) de distillation ainsi que du distillat obtenu à partir de cette solution EC-DMC après avoir mise en oeuvre l'étape g), à l'exemple 1.

Le procédé de recyclage de l'électrolyte d'une batterie Li-ion de l'invention s'applique aux électrolytes comprenant :
- un sel de lithium de formule A-Li, dans laquelle A est un anion choisi parmi un anion hexafluorophosphate (PF₆⁻), le trifluorométhanesulfonate (CF₃SO₃⁻), le perchlorate (ClO₄⁻) et le tétrafluoroborate (BF₄⁻)
- un solvant qui est un mélange binaire ou ternaire de carbonates cycliques choisis parmi le carbonate d'éthylène, le carbonate de propylène et le carbonate de butylène, des carbonates linéaires ou ramifiés choisis parmi le carbonate de diméthyle, le carbonate de diéthyle, le carbonate d'éthyle méthyle et le diméthoxyéthane.

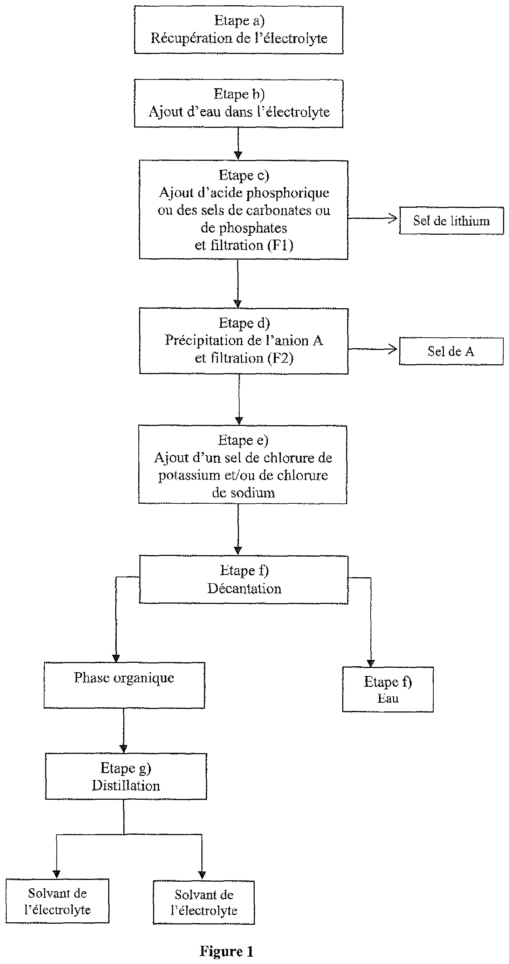

Comme on le voit sur la figure 1, dans un premier mode de mise en oeuvre, ce procédé comprend une étape a) de récupération de l'électrolyte.

Cette étape de récupération peut être tout simplement de prendre les électrolytes rejetés et stockés. Mais elle peut encore être de simplement ouvrir la batterie et de verser l'électrolyte dans un récipient pour le traiter ensuite par le procédé de l'invention.

Dans le cas où la batterie doit être ouverte, cela doit être effectué dans des conditions qui évitent son ignition.

De telles conditions peuvent être par exemple l'ouverture de la batterie sous atmosphère inerte.

Mais cette étape de récupération de l'électrolyte peut encore être une étape de broyage de la batterie, plus préférablement sous jet d'eau haute pression.

L'étape a) de récupération de l'électrolyte peut être une étape de broyage de la batterie sous atmosphère inerte.

L'étape a) de récupération de l'électrolyte peut également être une étape de broyage de la batterie sous jet d'eau haute pression.

Dans ce dernier cas, les étapes a) et b) du procédé de l'invention sont mises en oeuvre simultanément.

En effet, la seconde étape du procédé de l'invention est une étape d'ajout d'eau dans l'électrolyte.

Toujours dans le cas où la batterie est découpée (broyée) pour récupérer l'électrolyte, une étape de filtration (F3) est alors mise en oeuvre pour séparer les solides de la phase liquide (l'électrolyte en lui-même).

Le procédé de l'invention prévoit également de pouvoir traiter, éventuellement, les solides filtrés pour récupérer le reste de l'électrolyte. Dans ce cas, le procédé de l'invention comprend une étape a1) de lavage à l'eau des solides obtenus après la filtration (F3), suivie d'une étape a2) de filtration (F4) pour séparer la phase liquide de la phase solide et une étape a3) du mélange de la phase liquide obtenue à l'étape a2) avant l'étape c) du procédé de l'invention.

L'étape c) du procédé de l'invention est mise en oeuvre dans tous les modes de réalisation du procédé de l'invention.

Elle consiste à ajouter de l'acide phosphorique ou un ou plusieurs sels de carbonate ou de phosphate dans l'électrolyte à traiter.

Les sels de carbonates peuvent être choisis parmi du carbonate de calcium, du carbonate de sodium, du carbonate d'ammonium ou un mélange de deux ou plus de ceux-ci.

Les sels de phosphates peuvent être choisis parmi du phosphate de calcium, du phosphate de sodium, du phosphate d'ammonium ou un mélange de deux ou plus de ceux-ci.

On pourra également utiliser un bullage de CO₂ pour former un sel de carbonate de lithium.

A l'issue de l'étape c), on obtient un carbonate ou phosphate de lithium et de l'eau, qui sont séparés par une filtration (F1).

Le sel de lithium peut être utilisé de nouveau dans la fabrication d'une batterie de type Li-ion et l'eau est réutilisée dans le procédé de recyclage selon l'invention, à l'étape b).

Lors de cette étape c), le lithium de l'électrolyte est précipité.

Ce sel de lithium est ensuite récupéré par une filtration F1.

L'étape suivante du procédé de l'invention est alors l'étape d) qui consiste à ajouter de la pyridine à la phase aqueuse obtenue après l'étape (F2) pour précipiter l'anion A du sel de lithium.

Une filtration (F2) est alors effectuée pour séparer le sel de l'anion A obtenu à cette étape.

Puis, une étape e) d'ajout d'un acide, choisi parmi H₃PO₄, HCl, H₂SO₄, et l'acide citrique, et/ou d'un sel ou mélange de sels soluble de tels acides, choisi(s) parmi NaCl, KCl, Na₂SO₄, MgSO₄ et K₂SO₄ dans la phase aqueuse obtenue après que la filtration (F2) ait été effectuée, de manière à obtenir une solution ayant une force ionique supérieure à 1. Le sel, ou l'acide est donc ajouté à une concentration favorable à la démixtion des phases organique et aqueuse. La phase organique comprenant les constituants de l'eléctrloyte tels les carbonates.

Cette étape a pour but d'augmenter la force ionique de la phase liquide obtenue après la filtration (F2) au-delà de 1 pour obtenir une phase aqueuse contenant le sel et/ou l'acide ajouté et une phase organique contenant les solvants de l'électrolyte.

La concentration en sel favorable à la démixtion est déterminée par les connaissances générales de l'homme du métier, afin d'obtenir la démixtion ou séparation de phases souhaitée et une force ionique supérieure à 1.

Par exemple, une concentration supérieure à 2 mol/L dans le cas de NaCl ou KCl est suffisante.

De préférence il s'agit donc de chlorure de potassium et/ou de chlorure de sodium à une concentration d'au moins 2 mol.L⁻¹

Une étape f) de décantation est alors effectuée pour séparer la phase organique de la phase aqueuse.

La phase aqueuse obtenue à l'étape f) après la décantation, peut être recyclée à l'étape b) en tant qu'ajout d'eau.

En effet, il suffit d'abaisser la concentration en ions de cette phase aqueuse en ajoutant de l'eau, et, dès lors, la faible concentration en ions obtenue n'est pas préjudiciable pour le recyclage de cette phase aqueuse diluée dans le procédé de l'invention.

Quant à la phase organique obtenue après la décantation de l'étape f), elle subit à l'étape g), une distillation pour séparer les solvants de l'électrolyte l'un de l'autre.

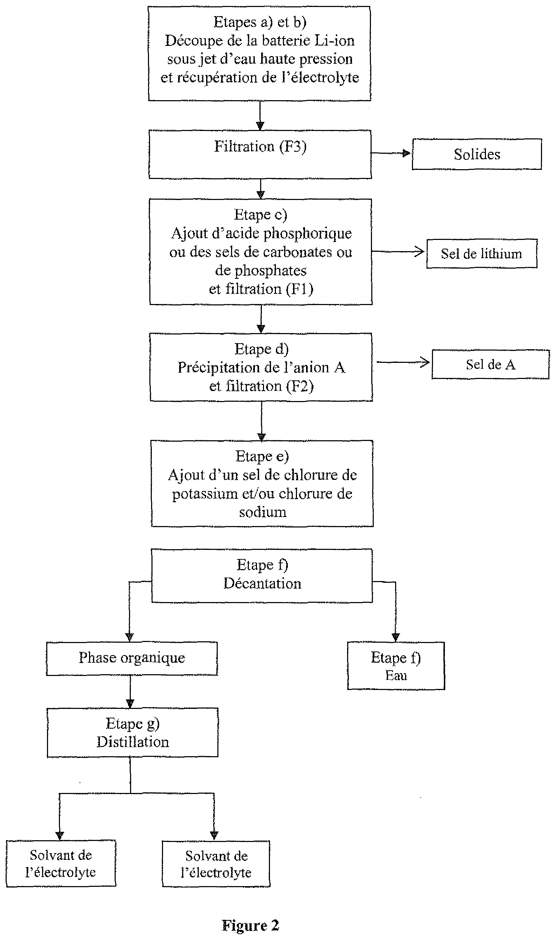

Dans le mode de réalisation illustré en figure 2 dans lequel l'étape a) est une étape de broyage de la batterie, le lavage des parties broyées peuvent être mis en oeuvre en même temps ou l'un après l'autre, c'est-à-dire d'abord broyage puis lavage.

Mais, on peut également broyer la batterie en présence de la solution de lavage, auquel cas les étapes a) et b) sont mises en oeuvre en même temps.

Ensuite, une étape c) de filtration (F3) est mise en oeuvre après l'étape b). Ainsi la phase liquide qui contient l'électrolyte est séparée de la phase solide qui contient le reste de la batterie.

Suivent ensuite les étapes telles que décrites pour le mode de réalisation décrit en figure 1, une étape e) de décantation de la phase liquide pour obtenir, d'une part, une phase organique comprenant les solvants organiques de l'électrolyte et, d'autre part, une phase aqueuse, contenant les sels de lithium.

Dans tous les modes de mise en oeuvre du procédé de l'invention, la décantation de l'étape f) est réalisée à température ambiante. Dans le cas où la phase organique contient toujours des traces du sel de lithium, l'étape de décantation peut être répétée après traitement de la phase aqueuse, et ce jusqu'à l'obtention de la pureté souhaitée.

Optionnellement, la phase organique peut-être est ensuite distillée, étape g), de manière à séparer les solvants organiques de l'électrolyte entre eux.

Les solvants organiques de l'électrolyte de la batterie ainsi récupérés peuvent être réutilisés dans la fabrication de l'électrolyte de nouvelles batteries.

Lorsque l'anion A est l'anion hexafluorophosphate, la précipitation par ajout de pyridine permet d'obtenir un composé de formule C₅H₅NHPF₆. Ce composé présente l'avantage d'être stable à l'air et peut être converti en sel hexafluorophosphate de lithium (LiPF₆).

Ainsi, grâce au procédé de l'invention, l'anion, ici, l'hexafluorophosphate, qui est susceptible de se dégrader en des espèces toxiques qui peuvent générer la dégradation de l'électrolyte de la batterie, est récupéré et converti en sel de lithium.

Dans le procédé de recyclage d'un électrolyte selon l'invention, les solvants organiques de l'électrolyte et l'eau peuvent être réutilisés dans le procédé de recyclage afin de diminuer le coût du procédé.

Par ailleurs, l'étape f) de décantation peut être répétée plusieurs fois afin de purifier davantage les solvants organiques de l'électrolyte.

Un autre objet de la présente invention est un procédé de recyclage de batteries de type Li-ion. Ce procédé comprend une étape de mise en oeuvre du procédé de recyclage d'électrolyte d'une batterie de type Li-ion selon la présente invention.

Ce procédé de recyclage d'une batterie de type Li-ion, comprend, de plus, une étape al) de lavage des solides obtenus après extraction de l'électrolyte et, en particulier les électrodes de la batterie obtenues, après la filtration (F3).

En effet, les électrodes contiennent de lithium provenant de l'électrolyte.

Les solides lavés sont ensuite séparés de la phase liquide par la filtration (F4) à l'étape a2) pour séparer la phase liquide de la phase solide.

Lors de l'étape suivante, étape a3), le filtrat (la phase liquide) obtenu à l'étape a2) est mélangé à l'étape e) de décantation de recyclage de l'électrolyte.

Les procédés objets de la présente invention peuvent être appliqués aux batteries de type Li-ion dont l'électrolyte est composé d'un mélange binaire ou ternaire des carbonates cycliques choisis parmi le carbonate d'éthylène, le carbonate de propylène et le carbonate de butylène, des carbonates linéaires ou ramifiés choisis parmi le carbonate de diméthyle, le carbonate de diéthyle, le carbonate d'éthyle méthyle et le diméthoxyéthane, dans lesquels est dissout un sel de lithium choisi parmi l'hexafluorophosphate de lithium, le trifluorométhanesulfonate de lithium, le perchlorate de lithium et le tétrafluoroborate de lithium.

Afin de mieux comprendre l'invention, on va maintenant en décrire, à titre purement illustratif et non limitatif un mode de mise en oeuvre de celle-ci.

### Exemple 1

Cet exemple décrit le procédé de recyclage de l'électrolyte d'une batterie de type Li-ion de la présente invention selon le mode de mise en oeuvre représenté en figure 2.

L'électrolyte de batterie de type Li-ion constitué de carbonate d'éthylène (EC), de carbonate de diméthyle (DMC) et d'hexafluorophosphate de lithium LiPF₆ (1M) qui est récupéré après découpage de la batterie sous un jet d'eau haute pression, typiquement de l'ordre de 6000 bars. L'électrolyte est ainsi nettoyé avec le volume d'eau utilisé lors de la découpe.

Ensuite, la phase liquide est séparée de la phase solide par une filtration (F1).

Puis, la solution aqueuse est traitée par un sel de phosphate, le Na₃(PO₄) et après filtration (F2), le sel de lithium et de l'eau sont obtenus.

Ensuite ; la phase aqueuse, elle, est traitée par ajout de la pyridine, en quantité équimolaire des anions PF₆⁻, puis filtrée (filtration F3) afin de former de l'hexafluorophosphate de pyridinium (C₅H₅NHPF₆), produit intermédiaire de la synthèse d'hexafluorophosphate de lithium (LiPF₆).

Puis, la phase liquide est traitée avec l'ajout de chlorure de sodium à une concentration de 2 mol.L⁻¹ pour atteindre une force ionique de 2 et permettre l'apparition de deux phases distinctes. Ainsi, pour une solution comprenant 10mL d'eau, 10mL de solution électrolytique, on ajoute 2.34g de chlorure de sodium (NaCl) et on observe une démixion immédiate entre la phase organique comprenant les solvants de l'électrolyte et la phase aqueuse.

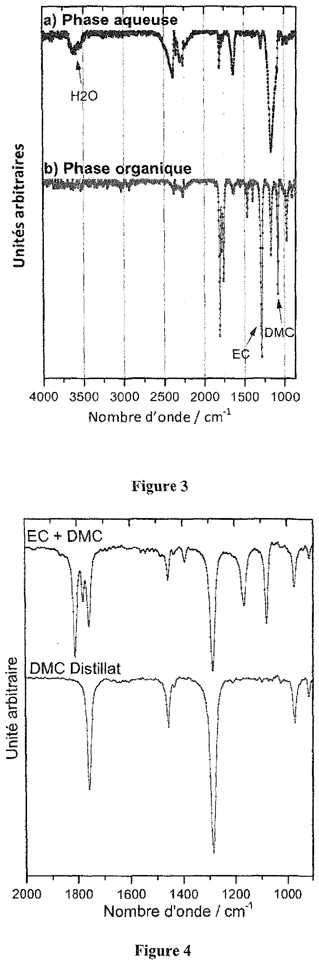

La figure 3 représente le spectre infrarouge de la solution aqueuse et de la solution organique diluée dans une matrice d'acétonitrile. Sur cette figure, on observe, pour la phase aqueuse, les bandes caractéristiques de l'eau situé dans la zone de 3000cm⁻¹ et 1600 cm⁻¹. Les autres bandes sont attribuables à une présence résiduelle des solvants organiques, EC et DMC, de l'électrolyte. Pour le spectre de la phase organique on observe l'absence des bandes caractéristiques de l'eau à 3000cm⁻¹, mais la présence des bandes caractéristiques de DMC et EC, respectivement à 1285cm⁻¹ et 1077cm⁻¹. Ceci indique que la démixtion a permis de séparer les solvants organiques de la phase aqueuse.

Après l'étape de décantation, la phase organique est traitée de façon indépendante.

La phase organique a été distillée à 140°C et sous pression atmosphérique. La figure 4 représente le spectre infrarouge du mélange EC-DMC et du distillat obtenu à partir de la solution EC-DMC. On obtient un distillat exempt d'éthylène carbonate (EC) pour une distillation à une température de 140°C. Ainsi, chaque produit est récupéré sélectivement et sans dégradation.

## Revendications

1. Procédé de recyclage d'un électrolyte contenant un sel du lithium de formule LiA, où A représente un anion choisi parmi PF₆⁻, CF₃SO₃⁻, BF₄⁻ et ClO₄⁻ d'une batterie de type Li-ion, **caractérisé en ce qu'**il comprend les étapes suivantes :
a) récupération de l'électrolyte ;
b) ajout d'eau à l'électrolyte ;
c) ajout d'acide phosphorique ou de sel(s) de carbonate ou de phosphate à la solution obtenue à l'étape b) puis filtration (F3), ce par quoi un sel de lithium et une phase aqueuse sont obtenus ;
d) précipitation de l'anion A du sel de lithium par ajout de pyridine à la phase aqueuse obtenue à l'étape c) puis filtration (F2), ce par quoi on obtient un précipité et une phase aqueuse ;
e) ajout à la solution aqueuse obtenue à l'étape d) d'un acide, choisi parmi H₃PO₄, HCl, H₂SO₄ et l'acide citrique, et/ou d'un sel soluble ou mélange de sels solubles de tels acides, choisis parmi NaCl, KCl, Na₂SO₄, MgSO₄ et K₂SO₄, de manière à obtenir une solution de force ionique supérieure à 1, de préférence du chlorure de potassium et/ou chlorure de sodium à une concentration de 2 mol.L⁻¹ est ajouté ou sont ajoutés;
f) décantation de la phase liquide obtenue après l'étape e), ce par quoi de l'eau et une phase organique contenant les solvants d'électrolyte sont obtenues ;
g) optionnellement, distillation de la phase organique obtenue à l'étape f) pour séparer les solvants de l'électrolyte ;

2. Procédé selon la revendication 1, **caractérisé en ce que** l'étape a) est réalisée par broyage sous jet d'eau de la batterie dans une enceinte sous atmosphère inerte et **en ce que** l'étape a) est suivie d'une étape de filtration (F3) pour séparer la phase liquide de la phase solide.

3. Procédé selon la revendication 1 ou 2, **caractérisé en ce que** les étapes a) et b) sont mises en oeuvre simultanément.

4. Procédé selon l'une quelconque des revendications précédentes, **caractérisé en ce que** l'étape f) de décantation est répétée.

5. Procédé selon l'une quelconque des revendications précédentes, **caractérisé en ce que** l'eau obtenue à l'étape f) est récupérée pour être réutilisée à l'étape b).

6. Procédé selon l'une quelconque des revendications 2 à 5, **caractérisé en ce qu'**il comprend, de plus, une étape al) de lavage à l'eau des solides obtenus après la filtration (F3), suivie d'une étape a2) de filtration (F4) pour séparer la phase liquide de la phase solide et une étape a3) de mélange de la phase liquide obtenue à l'étape a2) avant l'étape c).

7. Procédé de recyclage d'une batterie de type Li-ion, **caractérisé en ce qu'**il comprend une étape de recyclage de l'électrolyte de la batterie de type Li-ion selon l'une quelconque des revendications 1 à 6.

8. Procédé selon l'une quelconque des revendications précédentes, **caractérisé en ce que** l'électrolyte est composé d'un mélange binaire ou ternaire de carbonates cycliques choisis parmi le carbonate d'éthylène, le carbonate de propylène et le carbonate de butylène, des carbonates linéaires ou ramifiés choisis parmi le carbonate de diméthyle, le carbonate de diéthyle, le carbonate d'éthyl méthyle et le diméthoxyéthane, dans lesquels est dissous un sel de lithium choisi parmi l'hexafluorophosphate de lithium, le trifluorométhanesulfonate de lithium, le perchlorate de lithium et le tétrafluoroborate de lithium.

## Patentansprüche

1. Verfahren zum Recycling eines Elektrolyts, enthaltend ein Lithiumsalz der Formel LiA, wobei A ein Anion darstellt, ausgewählt aus PF₆⁻, CF₃SO₃⁻, BF₄⁻ und ClO₄⁻ einer Batterie vom Typ Li-ion, **dadurch gekennzeichnet, dass** es die folgenden Schritte umfasst:
a) Wiedergewinnen des Elektrolyts;
b) Zugeben von Wasser zum Elektrolyten;
c) Zugeben von Phosphorsäure oder Carbonatsalz(en) oder Phosphat zur Lösung, erhalten in Schritt b), dann Filtern (F3), wodurch ein Lithiumsalz und eine wässrige Phase erhalten werden;
d) Ausfällen des Anions A des Lithiumsalzes durch Zugeben von Pyridin zur wässrigen Phase, erhalten in Schritt c), dann Filtern (F2), wodurch eine Ausfällung und eine wässrige Phase erhalten werden;
e) Zugeben zur wässrigen Lösung, erhalten in Schritt d), einer Säure, ausgewählt aus H₃PO₄, HCl, H₂SO₄ und Zitronensäure, und/oder eines löslichen Salzes oder einer Mischung löslicher Salze derartiger Säuren, ausgewählt aus NaCl, KCl, Na₂SO₄, MgSO₄ und K₂SO₄, um eine Lösung mit einer Ionenstärke von mehr als 1 zu erhalten, vorzugsweise wird oder werden Kaliumchlorid und/oder Natriumchlorid mit einer Konzentration von 2 mol.L⁻¹ zugegeben;
f) Dekantieren der flüssigen Phase, erhalten nach Schritt e), wodurch Wasser und eine organische Phase, enthaltend die Elektrolytlösemittel, erhalten werden;
g) optional Destillieren der organischen Phase, erhalten in Schritt f), um die Elektrolytlösemittel zu trennen;

2. Verfahren nach Anspruch 1, **dadurch gekennzeichnet, dass** der Schritt a) durch Zerkleinerung unter Wasserstrahl der Batterie in einem Behälter unter inerter Atmosphäre durchgeführt wird, und dadurch, dass der Schritt a) von einem Schritt des Filterns (F3) gefolgt wird, um die flüssige Phase von der festen Phase zu trennen.

3. Verfahren nach Anspruch 1 oder 2, **dadurch gekennzeichnet, dass** die Schritte a) und b) gleichzeitig durchgeführt werden.

4. Verfahren nach einem der vorhergehenden Ansprüche, **dadurch gekennzeichnet, dass** der Schritt f) des Dekantierens wiederholt wird.

5. Verfahren nach einem der vorhergehenden Ansprüche, **dadurch gekennzeichnet, dass** das Wasser, erhalten in Schritt f), wiedergewonnen wird, um in Schritt b) wiederverwendet zu werden.

6. Verfahren nach einem der Ansprüche 2 bis 5, **dadurch gekennzeichnet, dass** es außerdem einen Schritt a1) des Waschens mit Wasser der Feststoffe, erhalten nach dem Filtern (F3), umfasst, gefolgt von einem Schritt a2) des Filterns (F4), um die flüssige Phase von der festen Phase zu trennen, und einem Schritt a3) des Mischens der flüssigen Phase, erhalten in Schritt a2) vor dem Schritt c).

7. Verfahren zum Recycling einer Batterie vom Typ Li-ion, **dadurch gekennzeichnet, dass** es einen Schritt des Recycelns des Elektrolyts der Batterie vom Typ Li-ion nach einem der Ansprüche 1 bis 6 umfasst.

8. Verfahren nach einem der vorhergehenden Ansprüche, **dadurch gekennzeichnet, dass** der Elektrolyt aus einer binären oder ternären Mischung aus cyclischen Carbonaten zusammengesetzt ist, ausgewählt aus Ethylencarbonat, Propylencarbonat und Butylencarbonat, linearen oder verzweigten Carbonaten, ausgewählt aus Dimethylcarbonat, Diethylcarbonat, Ethylmethylcarbonat und Dimethoxyethan, in denen ein Lithiumsalz gelöst ist, ausgewählt aus Lithiumhexafluorphosphat, Lithiumtrifluormethansulfonat, Lithiumperchlorat und Lithiumtetrafluorborat.

## Claims

1. Method for recycling an electrolyte containing a lithium salt having the formula LiA, where A is an anion chosen from PF₆⁻, CF₃SO₃⁻, BF₄⁻ and ClO₄⁻ of an Li-ion battery, **characterised in that** it comprises the following steps:
a) recovery of the electrolyte;
b) addition of water to the electrolyte;
c) addition of phosphoric acid or of a salt or salts of carbonate or of phosphate to the solution obtained in step b), then filtration (F3), by means of which a lithium salt and an aqueous phase are obtained;
d) precipitation of the anion A of the lithium salt via the addition of pyridine to the aqueous phase obtained in step c), then filtration (F2), by means of which a precipitate and an aqueous phase are obtained;
e) addition, to the aqueous solution obtained in step d), of an acid, chosen from H₃PO₄, HCl, H₂SO₄ and citric acid, and/or of a soluble salt or mixture of soluble salts of such acids, chosen from NaCl, KC1, Na₂SO₄, MgSO₄ and K₂SO₄, in such a way as to obtain a solution having an ionic force greater than 1, preferably potassium chloride and/or sodium chloride at a concentration of 2 mol.L⁻¹ is added or are added;
f) decantation of the liquid phase obtained after step e), by means of which water and an organic phase containing the solvents of electrolyte are obtained;
g) optionally, distillation of the organic phase obtained in step f) in order to separate the solvents from the electrolyte;

2. Method according to claim 1, **characterised in that** step a) is carried out by water jet grinding of the battery in a chamber under an inert atmosphere and **in that** step a) is followed by a filtering step (F3) in order to separate the liquid phase from the solid phase.

3. Method according to claim 1 or 2, **characterised in that** steps a) and b) are implemented simultaneously.

4. Method according to any one of the previous claims, **characterised in that** the step f) of decantation is repeated.

5. Method according to any one of the previous claims, **characterised in that** the water obtained in step f) is recovered in order to be reused in step b).

6. Method according to any one of claims 2 to 5, **characterised in that** it further comprises a step a1) of washing the solids obtained after the filtration (F3) with water, followed by a step a2) of filtration (F4) in order to separate the liquid phase from the solid phase and a step a3) of mixing the liquid phase obtained in step a2) before step c).

7. Method for recycling a Li-ion battery, **characterised in that** it comprises a step of recycling the electrolyte of the Li-ion battery according to any one of claims 1 to 6.

8. Method according to any one of the previous claims, **characterised in that** the electrolyte consists of a binary or ternary mixture of cyclic carbonates chosen from ethylene carbonate, propylene carbonate and butylene carbonate, linear or branched carbonates chosen from dimethyl carbonate, diethyl carbonate, ethyl methyl carbonate, and dimethoxyethane, in which a lithium salt chosen from lithium hexafluorophosphate, lithium trifluoromethanesulfonate, lithium perchlorate and lithium tetrafluoroborate is dissolved.
